# EUROPEAN PATENT APPLICATION

(11) **EP 4 394 964 A2**
(43) Date of publication of application: **03.07.2024**
(21) Application number: 23190097.8
(22) Date of filing: 07.08.2023
(51) Int. Cl.: H01M 10/04, H01M 50/105

(54) **RECHARGEABLE BATTERY AND DEVICE FOR FORMING POUCH OF THE SAME**

(30) Priority: 28.12.2022 KR 20220187881
(71) Applicant: Samsung SDI Co., Ltd., Yongin-si, Gyeonggi-do 17084 (KR)
(72) Inventor: KIM, Jinhwan, 17084 Yongin-si (KR)
(74) Representative: Marks & Clerk LLP

(57) **Abstract**

A rechargeable battery is provided. The rechargeable battery includes: a pouch that includes an outer flange disposed at an outer periphery thereof and a forming portion formed by forming with respect to a reverse forming portion; and a stacking type of electrode assembly included in the pouch. The forming portion includes a side wall corner portion connected to the outer flange and a bottom connected to the side wall corner portion, and the bottom includes a round portion connected to the side wall corner portion and a main bottom formed by absorbing the reverse forming portion formed during reverse forming of the pouch.

## Description

### BACKGROUND OF THE INVENTION

### (a) Field of the Invention

The present disclosure relates to a rechargeable battery and a device for forming a pouch of the rechargeable battery, and more specifically, to a rechargeable battery and a device for form ing a pouch of the rechargeable battery that stably secure a thickness of a side wall corner portion of the pouch and a thickness of a bottom of the pouch connected to the side wall corner portion.

### (b) Description of the Related Art

A rechargeable battery is a battery that repeatedly performs charging and discharging, unlike a primary battery. A small-capacity rechargeable battery may be used in a portable small electronic device such as a mobile phone, a laptop computer, or a camcorder, and a large-capacity rechargeable battery may be used as a power source for driving motors of a hybrid vehicle and an electric vehicle.

For example, the rechargeable battery includes an electrode assembly for charging and discharging, a pouch for accommodating the electrode assembly, and an electrode terminal electrically connected to the electrode assembly to draw the electrode assembly out to the outside of the pouch. The electrode assembly includes a winding type in which a negative electrode plate and a positive electrode plate are wound on both sides of a separator interposed therebetween, and a stacking type in which a negative electrode plate and a positive electrode plate are stacked on both sides of a separator interposed therebetween.

The pouch of the rechargeable battery accommodating the winding type electrode assembly may accommodate the electrode assembly even if a corner portion of the pouch is shaped (or formed) into a relatively large round shape. However, the pouch of the rechargeable battery accommodating the stacking type electrode assembly requires that a corner portion of the pouch be shaped into a smaller round shape than that of the pouch accommodating the winding type electrode assembly.

An application of the stacking type electrode assembly is required due to an increase in a capacity of the rechargeable battery and a decrease in a thickness of a smartphone. However, if deep drawing is simply done with a punch, securing a thickness at the corner portion of the pouch may be insufficient. For this reason, since the pouch of the rechargeable battery is used in a set with a structural weakness, safety may be insufficient.

The above information disclosed in this Background section is only for enhancement of understanding of the background of the disclosure, and therefore it may contain information that does not form the prior art that is already known to a person of ordinary skill in the art.

### SUMMARY OF THE INVENTION

An object of the present disclosure is to provide a rechargeable battery that stably secures a thickness of a side wall corner portion of a pouch and a thickness of a bottom of the pouch connected to the side wall corner portion even when a stack type of electrode assembly is applied since the pouch is formed by deep drawing in which a substrate (or a basic material) of the pouch is reversely formed with a reverse punch and then is formed with a punch.

Another object of the present disclosure is to provide a device for forming the pouch of the rechargeable battery.

A device for forming a pouch of a rechargeable battery according to an embodiment of the present disclosure includes: a die that supports (*e.g.* is configured to support) a first surface of a substrate of the pouch for the rechargeable battery and forms a first opening so that the substrate of the pouch is formed after the substrate of the pouch is reversely formed; a stripper that holds (*e.g*. is configured to hold) a second surface of the substrate of the pouch supported by the die and forms a second opening larger than the first opening; a reverse punch that ascends (*e.g.* is configured to ascend) through the first opening at a side of the first surface of the substrate of the pouch to reversely form the substrate of the pouch and performs (*e.g.* is configured to perform) primary stretching for a side wall corner portion of the pouch and a portion corresponding to a bottom connected to the side wall corner portion; and a punch that descends (*e.g.* is configured to descend) through the second opening at a side of the second surface of the substrate of the pouch from an opposite side of the reverse punch to form the substrate of the pouch and supplements (*e.g*. is configured to supplement) a thickness of the side wall corner portion of the pouch and a thickness of the bottom connected to the side wall corner portion when secondary stretching is performed by absorbing the primary stretching.

In a diagonal cross-section of the substrate of the pouch corresponding to the side wall corner portion of the pouch and the bottom connected to the side wall corner portion, a length of the reverse punch may be 70 to 90% of a length of the punch.

A depth of reverse forming of the substrate of the pouch may be 3.5 mm to 5.5 mm.

The reverse punch may primarily form (*e.g.* may be configured to primarily form) a reverse forming portion of the substrate of the pouch having a reverse direction depth within the second opening.

The punch may secondarily form (*e.g.* may be configured to secondarily form) a forming portion of the substrate of the pouch having a forward direction depth within the first opening while absorbing the reverse forming portion.

The reverse punch may form (*e.g.* may be configured to form) a reverse forming portion at the side wall corner portion of the pouch and the portion corresponding to the bottom connected to the side wall corner portion in the substrate of the pouch, and the reverse forming portion may include an outer flange region provided at an outer periphery of the substrate of the pouch, a central region minimally stretched from a center of the substrate of the pouch, an outer bending region bent and stretched due to reverse forming of the substrate of the pouch in the outer flange region, and a first reverse stretching region, a second reverse stretching region, and a third reverse stretching region sequentially stretched in a reverse direction between the outer bending region and the central region.

The reverse punch may reversely form (*e.g*. may be configured to reversely form) a reverse direction depth of the reverse forming portion to 3.5 mm to 5.5 mm with respect to the outer flange region as a reference plane, and may stretch (*e.g*. may be configured to stretch) the first reverse stretching region, the second reverse stretching region, and the third reverse stretching region by 4 µm to 5 µm.

The reverse punch may maximally stretch (*e.g*. may be configured to maximally stretch) the first reverse stretching region, the second reverse stretching region, and the third reverse stretching region at the reverse forming portion.

The reverse punch may form (*e.g*. may be configured to form) the reverse forming portion, and a thickness of a section between the outer bending region and the first reverse stretching region may decrease at a first change rate, a thickness of a section between the first reverse stretching region and the second reverse stretching region may decrease at a second change rate smaller than the first change rate, a thickness of a section between the second reverse stretching region and the third reverse stretching region may increase inversely to the second change rate, and a thickness of a section between the third reverse stretching region and the central region may increase at a third change rate.

A rechargeable battery according to an embodiment of the present disclosure includes: a pouch that includes an outer flange disposed at an outer periphery thereof and a forming portion formed by forming with respect to a reverse forming portion; and a stacking type of electrode assembly included in the pouch, and the forming portion includes a side wall corner portion connected to the outer flange and a bottom connected to the side wall corner portion, while the bottom includes a round portion connected to the side wall corner portion and a main bottom formed by absorbing the reverse forming portion formed during reverse forming of the pouch.

In a diagonal direction of the main bottom, a forming length of the forming portion formed during the forming may be longer than a reverse forming length of the reverse forming portion.

The reverse forming length may be 70 to 90% of the forming length.

The reverse forming portion may include an outer flange region, an outer bending region, a first reverse stretching region, a second reverse stretching region, a third reverse stretching region, and a central region sequentially formed from outer peripheries of the side wall corner portion of the pouch and a portion corresponding to the bottom connected to the side wall corner portion in a substrate of the pouch to centers of the side wall corner portion of the pouch and the portion corresponding to the bottom connected to the side wall corner portion, and the side wall corner portion of the forming portion may be formed of a portion excluding the outer flange at the outer flange region.

The round portion may be formed by stretching the outer bending region to be connected to the side wall corner portion, and the main bottom may be formed by absorbing the first reverse stretching region, the second reverse stretching region, the third reverse stretching region, and the central region.

A height of the side wall corner portion may be 3.5 mm to 5.5 mm, and a thickness of the pouch may be 76 µm to 85 µm.

A height of the side wall corner portion may be 3.5 mm to 4.5 mm, and when a thickness of the pouch is 76 µm, a thickness of the round portion may be 15.82 µm to 16.92 µm.

A height of the side wall corner portion may be 4.0 mm to 5.0 mm, and when a thickness of the pouch is 85 µm, a thickness of the round portion may be 16.13 µm to 18.01 µm.

A thickness of the main bottom may gradually increase as the main bottom goes from the round portion to a center of the bottom.

When a thickness of the pouch is 85 µm and a thickness of the side wall corner portion is 21.04 µm to 21.54 µm, a thickness of the round portion may be 20.48 µm to 20.79 µm.

A thickness of the main bottom may be 21.43 µm to 27.62 µm.

At least some of the above and other features of the invention are set out in the claims.

As described above, an embodiment of the present disclosure may secure a sufficient thickness of a side wall corner portion of a pouch and a sufficient thickness of a bottom of the pouch connected to the side wall corner portion even when a stack type of electrode assembly is applied since the pouch is formed by deep drawing in which a substrate of the pouch is reversely formed with a reverse punch and then is formed with a punch.

An embodiment of the present disclosure may secure a sufficient thickness of the side wall corner portion as well as a sufficient thickness of a round portion connected to the side wall corner portion since the bottom of the pouch including the round portion and a main bottom connected to the round portion is formed (or shaped).

### BRIEF DESCRIPTION OF THE DRAWINGS

FIG. 1 is a configuration diagram of a forming preparation step (or a shaping preparation step) of a device for forming a pouch of a rechargeable battery according to an embodiment of the present disclosure.
FIG. 2 is an operation state diagram of a stripper lowering step of the device for forming the pouch of the rechargeable battery of FIG. 1.
FIG. 3 is an operational state diagram of a reverse forming step following FIG. 2.
FIG. 4 is an operation state diagram of a forming step following FIG. 3.
FIG. 5 is a configuration diagram showing a relative size of a reverse punch length with respect to a punch length in the configuration diagram of FIG. 1.
FIG. 6 is a planar image of the pouch reversely formed with a reverse punch having a length relationship of FIG. 5.
FIG. 7 is a cross-sectional view of a reverse forming state taken along a cut line VII-VII of FIG. 6.
FIG. 8 is a cross-sectional view of a forming state after reverse forming of FIG. 7.
FIG. 9 is a perspective view of a rechargeable battery manufactured as a pouch through reverse forming and forming of FIG. 8.
FIG. 10 is an exploded perspective view of FIG. 9.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

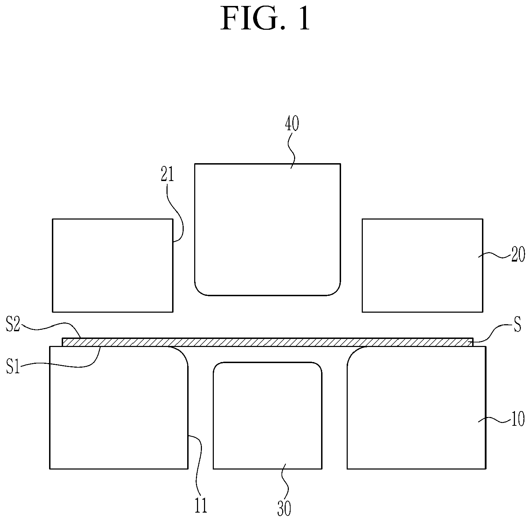

FIG. 1 is a configuration diagram of a forming preparation step (or a shaping preparation step) of a device for forming a pouch of a rechargeable battery according to an embodiment of the present disclosure. Referring to FIG. 1, the device for forming the pouch of the rechargeable battery according to the embodiment includes a die 10, a stripper 20, a reverse punch 30, and a punch 40. The die 10 supports a first surface (or a first face) S1 of a substrate (a basic material or a material) S of the pouch for the rechargeable battery and forms a first opening 11 so that the pouch is formed (or shaped) by reversely forming the pouch substrate S and then forming (or forwardly forming) the pouch.

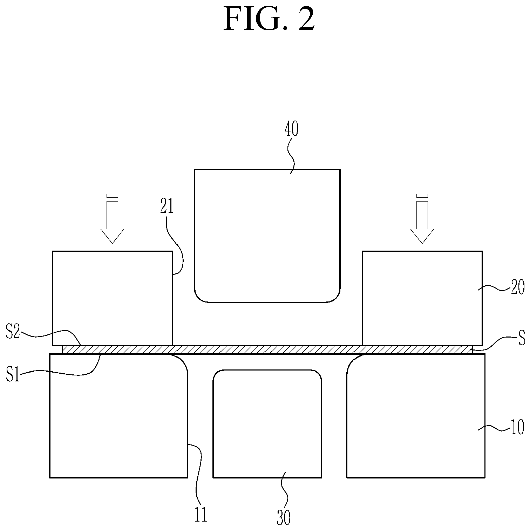

FIG. 2 is an operation state diagram of a stripper lowering step of the device for forming the pouch of the rechargeable battery of FIG. 1. Referring to FIG. 2, the stripper 20 holds a second surface (or a second face) S2 of the pouch substrate S supported by the die 10 and forms a second opening 21 that is larger than the first opening 11 and has concentricity. As an example, a lower surface of the pouch substrate S is referred to as the first surface S1, and an upper surface of the pouch substrate S is referred to as the second surface S2.

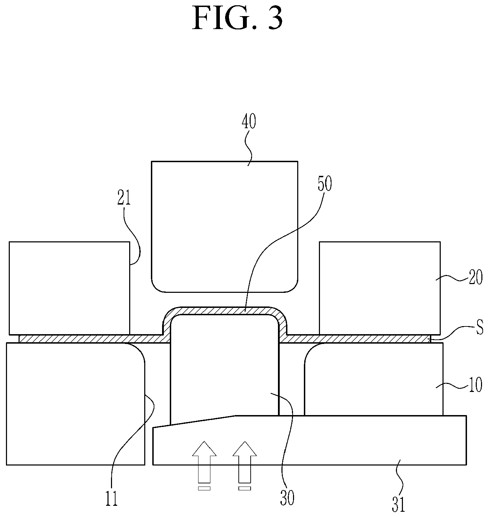

FIG. 3 is an operational state diagram of a reverse forming step following FIG. 2. Referring to FIG. 3, the reverse punch 30 ascends (or lifts) through the first opening 11 at a side of the first surface S1 of the pouch substrate S to reversely form the pouch substrate S. That is, a reverse forming portion 50 is formed at the pouch substrate S below the punch 40 and within the second opening 21 of the stripper 20. As an example, the reverse punch 30 may be lifted and lowered by a cylinder 31.

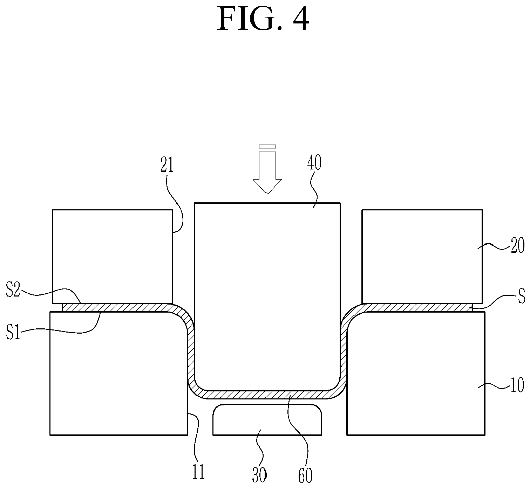

FIG. 4 is an operation state diagram of a forming step following FIG. 3. Referring to FIG. 4, the punch 40 descends through the second opening 21 at a side of the second surface S2 of the pouch substrate S from an opposite side of the reverse punch 30 to form the pouch substrate S. The forming absorbs the reverse forming portion 50 to form a forming portion 60. That is, the forming portion 60 is formed at the pouch substrate S above the reverse punch 30 and within the first opening 11 of the die 10.

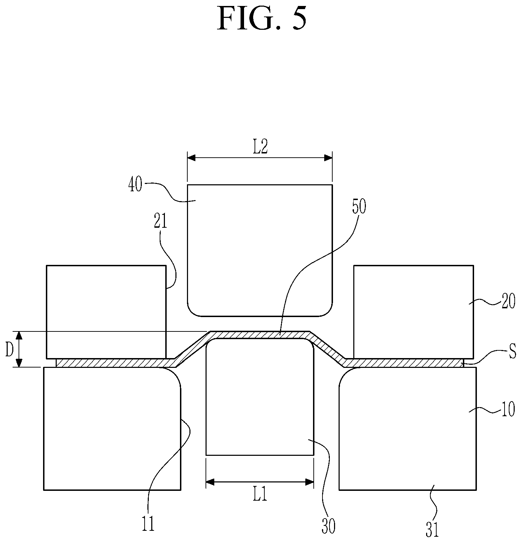

FIG. 5 is a configuration diagram showing a relative size of a reverse punch length with respect to a punch length in the configuration diagram of FIG. 1. Referring to FIGS. 1 to 5, in a diagonal cross-section of the pouch substrate S, a length L1 of the reverse punch 30 forming the reverse forming portion 50 is 70 to 90% (L1 = (0.7 to 0.9) * L2) of a length L2 of the punch 40. The length L1 is the 'diagonal length' of the reverse punch 30, and the length L2 is the 'diagonal length' of the forward punch 40.

When the length L1 of the reverse punch 30 is less than 70% of the length L2 of the punch 40, a distance between the reverse punch 30 and an inner surface of the second opening 21 of the stripper 20 is too far so that an effect of reverse forming is lowered. When the length L1 of the reverse punch 30 exceeds 90% of the length L2 of the punch 40, the distance between the reverse punch 30 and the inner surface of the second opening 21 of the stripper 20 may be too short and a distance between the reverse punch and a stretching object for the reverse forming may be too short so that the pouch substrate S is damaged during the reverse forming.

A depth D of the reverse forming formed by the reverse forming portion 50 may be 3.5 mm to 5.5 mm. In addition, when the depth D of the reverse forming is less than 3.5 mm, the effect of the reverse forming is reduced. When the depth D of the reverse forming is greater than 5.5 mm, the pouch substrate S may be damaged due to excessive reverse forming.

For example, a thickness of the pouch substrate S is 76 to 85 µm, and a height of a side wall of the pouch is 3.5 mm to 5.5 mm. The depth of the reverse forming may be changed according to the height of the sidewall of the pouch by the forming and the thickness of the pouch substrate S.

As described above, the reverse punch 30 primarily forms (or shapes) the reverse forming portion 50 of the pouch substrate S having a reverse direction depth within the second opening 21. The reverse direction depth means the depth D of the reverse forming.

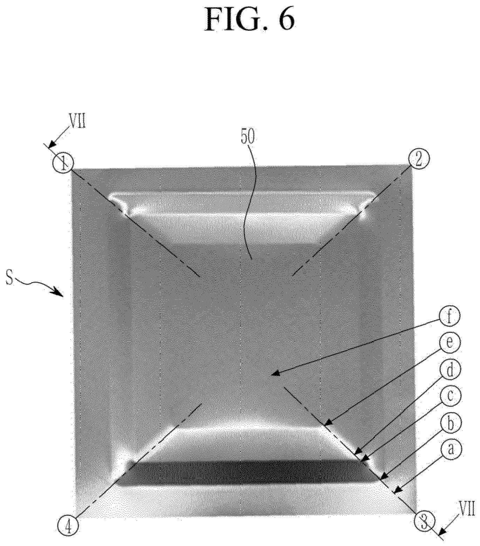

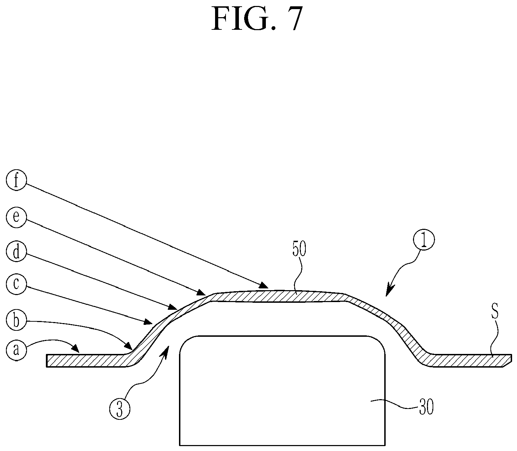

FIG. 6 is a planar image of the pouch reversely formed with the reverse punch having a length relationship of FIG. 5, and FIG. 7 is a cross-sectional view of a reverse forming state taken along a cut line VII-VII of FIG. 6. A thickness (µm) shown in Table 1 may be obtained from the reverse forming portion 50 of FIGS. 6 and 7.

**(Table 1)**

| Measurement position | Outer flange region (ⓐ) | Outer bending region (ⓑ) | First reverse stretching region (ⓒ) | Second reverse stretching region (ⓓ) | Third reverse stretching region (ⓔ) | Central region (ⓕ) |
|---|---|---|---|---|---|---|
| First corner | 33.23 | 32.64 | 30.71 | 30.30 | 30.17 | 33.56 |
| (①) | | | | | | |
| Second corner (②) | 32.79 | 31.09 | 30.36 | 31.77 | 31.34 | 33.05 |
| Third corner (③) | 32.79 | 31.09 | 29.74 | 28.98 | 30.32 | 33.01 |
| Fourth corner (④) | 33.15 | 31.20 | 30.56 | 31.52 | 31.32 | 33.09 |

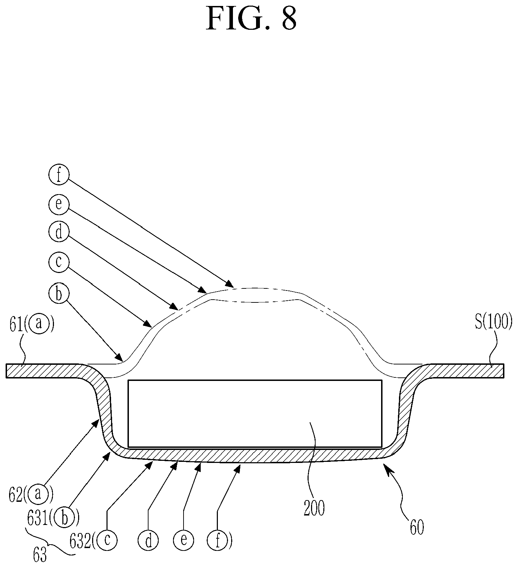

The reverse punch 30 forms the reverse forming porting 50 at a side wall corner portion 62 of the pouch 100 of FIG. 8 to be formed in the pouch substrate S and a portion (a round portion 631 and a main bottom portion (or a main bottom) 632) corresponding to a bottom 63 connected to the side wall corner portion 62.

The reverse forming portion 50 is formed at a portion other than a portion corresponding to the corner portion 62 and the bottom 63 connected to the corner portion 62, but a first corner ①, a second corner ②, a third corner ③, and a fourth corner ④ forming the corner portion 62 of the pouch and the round portion 631 of the pouch connected to the corner portion 62 that are portions where it is substantially most difficult to secure a thickness, will be mainly described.

In the second corner ②, the reverse forming portion 50 includes an outer flange region ⓐ provided at an outer periphery of the pouch substrate S, a central region ⓕ minimally stretched from a center of the pouch substrate S, an outer bending region ⓑ bent and stretched due to the reverse forming in the outer flange region ⓐ, and a first reverse stretching region ⓒ, a second reverse stretching region ⓓ, and a third reverse stretching region ⓔ sequentially stretched in a reverse direction between the outer bending region ⓑ and the central region ⓕ. Primary stretching of the first corner ①, the second corner ②, the third corner ③, and the fourth corner ④ mainly occurs at the first reverse stretching region ⓒ, the second reverse stretching region ⓓ, and the third reverse stretching region ⓔ.

The reverse punch 30 reversely forms the reverse direction depth D of the reverse forming portion 50 to 3.5 mm to 5.5 mm with respect to the outer flange region ⓐ as a reference plane, and may stretch the first reverse stretching region ⓒ, the second reverse stretching region ⓓ, and the third reverse stretching region ⓔ by 4 µm to 5 µm. The reverse punch 30 maximally stretches the first reverse stretching region ⓒ, the second reverse stretching region ⓓ, and the third reverse stretching region ⓔ at the reverse forming portion 50.

The reverse punch 30 forms the reverse forming portion 50. A thickness of a section between the outer bending region ⓑ and the first reverse stretching region ⓒ decreases at a first change rate. A thickness of a section between the first reverse stretching region ⓒ and the second reverse stretching region ⓓ decreases at a second change rate smaller than the first change rate. A thickness of a section between the second reverse stretching region ⓓ and the third reverse stretching region ⓔ generally increases inversely to the second change rate. A thickness of a section between the third reverse stretching region ⓔ and the central region ⓕ increases at a third change rate. The first reverse stretching region ⓒ, the second reverse stretching region ⓓ, and the third reverse stretching region ⓔ by the primary stretching have generally similar thicknesses.

FIG. 8 is a cross-sectional view of a forming state after the reverse forming of FIG. 7. Referring to FIGS. 7 and 8, the punch 40 descends through the second opening 21 at a side of the second surface S2 of the pouch substrate S from an opposite side of the reverse punch 30 to secondarily stretch the pouch substrate S by forming the pouch substrate S.

During the secondary stretching of the forming, the forming portion 60 is formed by supplementing a thickness of the side wall corner portion 62 of the pouch 100 to be formed and a thickness of the portion (the round portion 631 and the main bottom portion 632) corresponding to the bottom 63 of the pouch 100 connected to the side wall corner portion 62 by absorbing the primary stretching.

The forming portion 60 includes the side wall corner portion 62 connected to an outer flange 61 and the bottom 63 connected to the side wall corner portion 62. The bottom 63 includes the round portion 631 (ⓑ) connected to the side wall corner portion 62, and the main bottom portion 632 formed by absorbing the reverse forming portion 50 formed during the reverse forming.

In a diagonal direction of the main bottom portion 632, a forming length (L2) of the forming portion 60 formed during the forming is longer than a reverse forming length (L1) of the reverse forming portion 50 (L2 > L1). The reverse forming length (L1) may be 70 to 90% (L1 = (0.7 to 0.9) * L2) of the forming length (L2). The reverse forming length L1 is the 'diagonal length' of the reverse forming portion 50, and the forming length L2 is the 'diagonal length' of the forming portion 60.

The reverse forming portion 50 includes the outer flange region ⓐ, the outer bending region ⓑ, the first reverse stretching region ⓒ, the second reverse stretching region ⓓ, the third reverse stretching region ⓔ, and the central region ⓕ sequentially formed from outer peripheries of the side wall corner portion 62 of the pouch 100 and the portion corresponding to the bottom 63 connected to the side wall corner portion 62 in the pouch substrate S to centers of the side wall corner portion 62 of the pouch 100 and the portion corresponding to the bottom 63 connected to the side wall corner portion 62.

The side wall corner portion 62 of the forming portion 60 is formed of a portion excluding the outer flange 61 at the outer flange region ⓐ. The round portion 631(ⓑ) of the pouch 100 is formed by stretching the outer bending region ⓑ to be connected to the side wall corner portion 62. The main bottom portion 632 of the pouch 100 is formed by absorbing the first reverse stretching region ⓒ, the second reverse stretching region ⓓ, the third reverse stretching region ⓔ, and the central region ⓕ. In the bottom 63, a thickness of the main bottom portion 632 gradually increases as the main bottom portion 632 goes from the round portion 631 to a center of the bottom 63.

As an example, a height of the side wall corner portion 62 (@) may be 3.5 mm to 5.5 mm, and a thickness of the pouch 100 may be 76 µm to 85 µm.

**(Table 2)**

| Forming depth (mm) | Comparative example | Embodiment |
|---|---|---|
| 3.5 | 15.72 | 16.81 |
| 4.0 | 16.05 | 16.92 |
| 4.5 | 15.17 | 15.82 |

As shown in Table 2, when a thickness of the pouch 100 is 76 µm, a height of the side wall corner portion 62 (@), that is a forming depth, may be 3.5 mm to 4.5 mm, and a thickness of the round portion 631 (ⓑ) may be 15.82 µm to 16.92 µm. It may be seen that a thickness of the round portion 631 (ⓑ) is secured to be thicker in the embodiment to which the reverse forming is applied compared with a comparative example to which the reverse forming is not applied.

**(Table 3)**

| Forming depth (mm) | Comparative example | Embodiment |
|---|---|---|
| 4.0 | 17.39 | 18.01 |
| 4.5 | 16.04 | 17.54 |
| 5.0 | 15.34 | 16.13 |

As shown in Table 3, when a thickness of the pouch 100 is 85 µm, a height of the side wall corner portion 62 (ⓐ), that is a forming depth, may be 4.0 mm to 5.0 mm, and a thickness of the round portion 631 (ⓑ) may be 16.13 µm to 18.01 µm. It may be seen that a thickness of the round portion 631 (ⓑ) is secured to be thicker in the example to which the reverse forming is applied compared with a comparative example to which the reverse forming is not applied and in which a thickness of the round portion 631 (ⓑ) is 15.34 µm to 17.39 µm.

**(Table 4)**

| Forming portion (Forming portion and reverse forming portion) | | Side wall corner portion (62(ⓐ)) | Round portion (631(ⓑ)) | Main bottom portion (632(ⓒ) ) | Main bottom portion (632(ⓓ)) | Main bottom portion (632(ⓔ)) | Main bottom portion (632(ⓕ)) |
|---|---|---|---|---|---|---|---|
| Compa | 1 | 19.48 | 18.41 | 27.42 | 30.69 | 30.62 | 31.01 |
| rative exampl e | 2 | 19.89 | 18.04 | 28.43 | 31.23 | 31.34 | 30.05 |
| Embodi ment | 1 | 21.04 | 20.48 | 22.84 | 24.58 | 27.62 | 27.85 |
| | 2 | 21.54 | 20.79 | 21.43 | 24.65 | 26.23 | 26.35 |

As shown in Table 4, when a thickness of the pouch 100 in Embodiments 1 and 2 is 85 µm, a thickness of the side wall corner portion 62 (ⓐ) that is a forming depth, may be 21.04 µm to 21.54 µm, and a thickness of the round portion 631(ⓑ) may be 20.48 µm to 20.79 µm.

In contrast, in Comparative Examples 1 and 2 to which the reverse forming is not applied, a thickness of the side wall corner portion the may be 19.48 µm to 19.89 µm, and a thickness of the round portion may be 18.04 µm to 18.41 µm.

Therefore, it may be seen that a thickness of the side wall corner portion 62 (ⓐ) and a thickness of the round portion 631 (ⓑ) are secured to be thicker in Embodiments 1 and 2 to which the reverse forming is applied compared with Comparative Examples 1 and 2. It may be seen that a thickness of the main bottom portion 632 is secured to be thinner in Embodiments 1 and 2 compared with Comparative Examples 1 and 2.

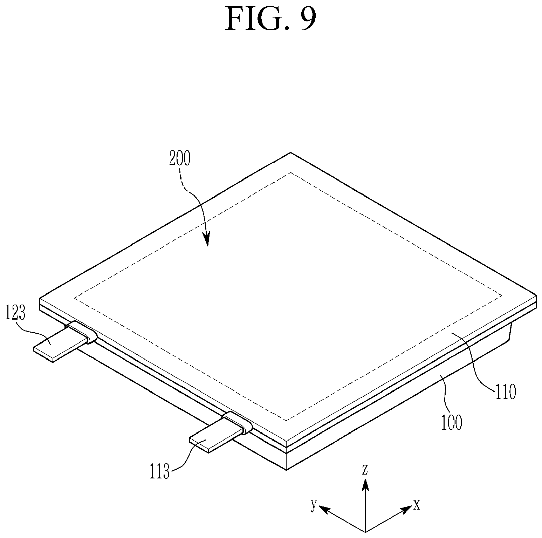

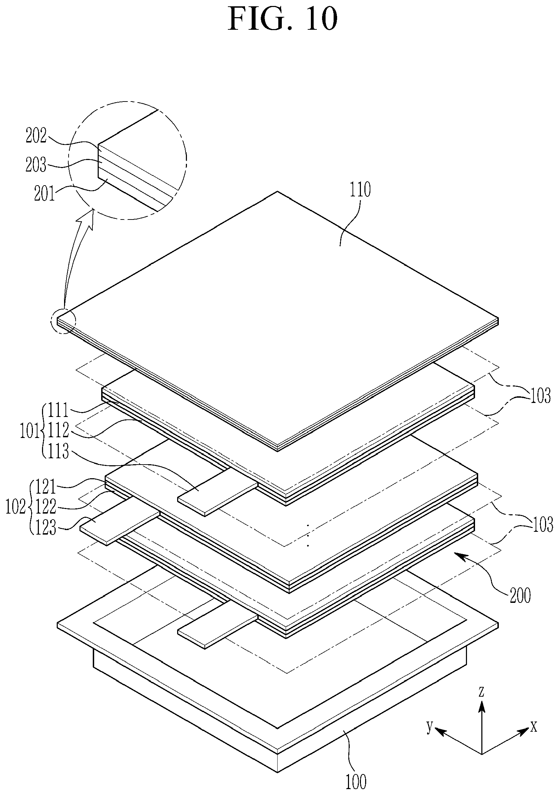

FIG. 9 is a perspective view of a rechargeable battery manufactured as a pouch through the reverse forming and the forming of FIG. 8, and FIG. 10 is an exploded perspective view of FIG. 9. Referring to FIGS. 9 and 10, the rechargeable battery according to an embodiment includes the pouch 100 and a stacking type of electrode assembly 200 included in the pouch 100.

The pouch 100 is manufactured through the reverse forming and the forming of the pouch substrate S as shown in FIGS. 1 to 8. The pouch 100 includes the outer flange 61 disposed at an outer periphery thereof and the forming portion 60 formed by forming with respect to the reverse forming portion 50. The pouch 100 may be integrally formed with a cover 110, but in the present embodiment, a configuration in which the pouch 100 and the cover 110 are separately formed will be described as an example.

The electrode assembly 200 includes a separator 103, and a first electrode plate 101 and a second electrode plate 102 formed of sheets at both surfaces of the separator 103. That is, the electrode assembly 200 has a structure in which the first electrode plate 101 and the second electrode plate 102 are disposed at both surfaces of the separator 103 that is repeatedly disposed.

As an example, the first electrode plate 101 is a positive electrode plate, and includes a positive electrode active material layer 112 at both surfaces of an electrode current collecting plate 111. The electrode current collecting plate 111 includes an electrode tab 113 with an uncoated portion protruding to one side. The electrode tab 113 is directly drawn out of the pouch 100 or is connected to a lead tab (not shown) to be drawn out of the pouch 100.

The second electrode plate 102 is a negative electrode plate, and includes a negative electrode active material layer 122 at both surfaces of an electrode current collecting plate 121. The electrode current collecting plate 121 includes an electrode tab 123 with an uncoated portion protruding to one side. The electrode tab 123 is directly drawn out of the pouch 100 or is connected to a lead tab (not shown) to be drawn out of the pouch 100.

In the rechargeable battery according to the embodiment, even when the stacking type of electrode assembly 200 is embedded in the pouch 100 formed by the reverse forming and the forming, a thickness of the side wall corner portion 62 and a thickness of the round portion 631 are stably secured.

For example, the pouch substrate S forming the pouch 100 and the cover 110 may be formed including a polymer sheet 201 forming an inner surface and acting as electrical insulation and thermal bonding, a nylon sheet 202 that forms an outer surface and acts as protection, and an aluminium sheet 203 providing mechanical strength.

The aluminium sheet 203 may be a portion that contributes to securing thicknesses of the side wall corner portion 62 and the round portion 631 by the forming after the reverse forming of the pouch substrate S.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

| | | | |
|---|---|---|---|
| 10: | die | 11: | first opening |
| 20: | stripper | 21: | second opening |
| 30: | reverse punch | 31: | cylinder |
| 40: | punch | 50: | reverse forming portion |
| 60: | forming portion | 61: | outer flange |
| 62: | side wall corner portion (forming depth) | 63: | bottom |
| 100: | pouch | 101: | first electrode plate |
| 102: | second electrode plate | 103: | separator |
| 110: | cover | 111: | electrode current collecting plate |
| 112: | positive electrode active material layer | 113: | electrode tab |
| 121: | electrode current collecting plate | | |
| 122: | negative electrode active material layer | | |
| 123: | electrode tab | 200: | electrode assembly |
| 201: | polymer sheet | 202: | nylon sheet |
| 203: | aluminium sheet | 631: | round portion |
| 632: | main bottom | D: | reverse forming depth |
| L1: | reverse punch length (reverse forming length) | | |
| L2: | punch length (forming length) | | |
| S: | pouch substrate | S1: | first surface |
| S2: | second surface | ①: | first corner |
| ②: | second corner | ③: | third corner |
| ④: | fourth corner | □: | outer flange region |
| □: | outer bending region | □: | first reverse stretching region |
| □: | second reverse stretching region | □: | third reverse stretching region |
| □: | central region | | |

## Claims

1. A device for forming a pouch of a rechargeable battery, comprising:
a die (10) that is configured to support a first surface (S1) of a substrate (S) of the pouch for the rechargeable battery and forms a first opening (11) so that the substrate (S) of the pouch is formed after the substrate (S) of the pouch is reversely formed;
a stripper (20) that is configured to hold a second surface (S2) of the substrate (S) of the pouch supported by the die (10) and forms a second opening (21) larger than the first opening (11);
a reverse punch (30) that is configured to ascend through the first opening (11) at a side of the first surface (S1) of the substrate (S) of the pouch to reversely form the substrate (S) of the pouch and is configured to perform primary stretching for a side wall corner portion (62) of the pouch and a portion corresponding to a bottom (63) connected to the side wall corner portion (62); and
a punch (40) that is configured to descend through the second opening (21) at a side of the second surface (S2) of the substrate (S) of the pouch from an opposite side of the reverse punch (30) to form the substrate (S) of the pouch and is configured to supplement a thickness of the side wall corner portion (62) of the pouch and a thickness of the bottom (63) connected to the side wall corner portion (62) when secondary stretching is performed by absorbing the primary stretching.

2. The device of claim 1, wherein in a diagonal cross-section of the substrate (S) of the pouch corresponding to the side wall corner portion (62) of the pouch and the bottom (63) connected to the side wall corner portion (62), a length (L1) of the reverse punch (30) is 70 to 90% of a length (L2) of the punch (40).

3. The device of claim 1 or claim 2, wherein a depth (D) of reverse forming of the substrate (S) of the pouch is 3.5 mm to 5.5 mm.

4. The device of any one of claims 1 to 3, wherein the reverse punch (30) is configured to primarily form a reverse forming portion (50) of the substrate (S) of the pouch having a reverse direction depth (D) within the second opening (21), optionally wherein:
the punch (40) is configured to secondarily form a forming portion (60) of the substrate (S) of the pouch having a forward direction depth within the first opening (11) while absorbing the reverse forming portion (50).

5. The device of any one of claims 1 to 4, wherein the reverse punch (30) is configured to form a reverse forming portion (50) at the side wall corner portion (62) of the pouch and the portion corresponding to the bottom (63) connected to the side wall corner portion (62) in the substrate (S) of the pouch, and the reverse forming portion (50) includes an outer flange region (61) provided at an outer periphery of the substrate (S) of the pouch, a central region (ⓕ) minimally stretched from a center of the substrate (S) of the pouch, an outer bending region (ⓑ) bent and stretched due to reverse forming of the substrate (S) of the pouch in the outer flange region (61), and a first reverse stretching region (@), a second reverse stretching region (ⓓ), and a third reverse stretching region (@) sequentially stretched in a reverse direction between the outer bending region (ⓑ) and the central region (ⓕ).

6. The device of claim 5, wherein the reverse punch (30) is configured to reversely form a reverse direction depth (D) of the reverse forming portion (50) to 3.5 mm to 5.5 mm with respect to the outer flange region (61) as a reference plane, and is configured to stretch the first reverse stretching region (ⓒ), the second reverse stretching region (ⓓ), and the third reverse stretching region (ⓔ) by 4 µm to 5 µm.

7. The device of claim 5 or claim 6, wherein the reverse punch (30) is configured to maximally stretch the first reverse stretching region (ⓒ), the second reverse stretching region (ⓓ), and the third reverse stretching region (@) at the reverse forming portion (50), optionally wherein:
the reverse punch (30) is configured to form the reverse forming portion (50), and a thickness of a section between the outer bending region (ⓑ) and the first reverse stretching region (ⓒ) decreases at a first change rate, a thickness of a section between the first reverse stretching region (ⓒ) and the second reverse stretching region (ⓓ) decreases at a second change rate smaller than the first change rate, a thickness of a section between the second reverse stretching region (ⓓ) and the third reverse stretching region (ⓔ) increases inversely to the second change rate, and a thickness of a section between the third reverse stretching region (ⓔ) and the central region (ⓕ) increases at a third change rate.

8. A rechargeable battery comprising:
a pouch that includes an outer flange (61) disposed at an outer periphery thereof and a forming portion (60) formed by forming with respect to a reverse forming portion (50); and
a stacking type of electrode assembly (200) included in the pouch,
wherein the forming portion (60) includes a side wall corner portion (62) connected to the outer flange (61) and a bottom (63) connected to the side wall corner portion (62), and the bottom (63) includes a round portion (631) connected to the side wall corner portion (62) and a main bottom (632) formed by absorbing the reverse forming portion (50) formed during reverse forming of the pouch.

9. The rechargeable battery of claim 8, wherein in a diagonal direction of the main bottom (632), a forming length (L2) of the forming portion (60) formed during the forming is longer than a reverse forming length (L1) of the reverse forming portion (50).

10. The rechargeable battery of claim 9, wherein the reverse forming length (L1) is 70 to 90% of the forming length (L2).

11. The rechargeable battery of claim 9 or claim 10, wherein the reverse forming portion (50) includes an outer flange region (@), an outer bending region (ⓑ), a first reverse stretching region (ⓒ), a second reverse stretching region (ⓓ), a third reverse stretching region (ⓔ), and a central region (ⓕ) sequentially formed from outer peripheries of the side wall corner portion (62) of the pouch and a portion corresponding to the bottom (63) connected to the side wall corner portion (62) in a substrate (S) of the pouch to centers of the side wall corner portion (62) of the pouch and the portion corresponding to the bottom (63) connected to the side wall corner portion (62), and the side wall corner portion (62) of the forming portion (60) is formed of a portion excluding the outer flange (61) at the outer flange region (@), optionally wherein:
the round portion (631) is formed by stretching the outer bending region (ⓑ) to be connected to the side wall corner portion (62), and the main bottom (632) is formed by absorbing the first reverse stretching region (ⓒ), the second reverse stretching region (ⓓ), the third reverse stretching region (ⓔ), and the central region (ⓕ).

12. The rechargeable battery of any one of claims 8 to 11, wherein a height of the side wall corner portion (62) is 3.5 mm to 5.5 mm, and a thickness of the pouch is 76 µm to 85 µm.

13. The rechargeable battery of any one of claims 8 to 11, wherein:
(i) a height of the side wall corner portion (62) is 3.5 mm to 4.5 mm, and when a thickness of the pouch is 76 µm, a thickness of the round portion (631) is 15.82 µm to 16.92 µm; or
(ii) a height of the side wall corner portion (62) is 4.0 mm to 5.0 mm, and when a thickness of the pouch is 85 µm, a thickness of the round portion (631) is 16.13 µm to 18.01 µm.

14. The rechargeable battery of any one of claims 8 to 11, wherein a thickness of the main bottom (632) gradually increases as the main bottom (632) goes from the round portion (631) to a center of the bottom (63).

15. The rechargeable battery of claim 14, wherein when a thickness of the pouch is 85 µm and a thickness of the side wall corner portion (62) is 21.04 µm to 21.54 µm, a thickness of the round portion (631) is 20.48 µm to 20.79 µm, optionally wherein a thickness of the main bottom (632) is 21.43 µm to 27.62 µm.
